# EUROPEAN PATENT APPLICATION

(11) **EP 2 591 953 A1**
(43) Date of publication of application: **15.05.2013**
(21) Application number: 11803436.2
(22) Date of filing: 17.06.2011
(51) Int. Cl.: B60R 21/201, B60R 21/213, B60R 21/237

(54) **AIR BAG DEVICE**

(30) Priority: 05.07.2010 JP 2010152791
(71) Applicant: Ashimori Industry Co., Ltd., Osaka-shi, Osaka 550-0014 (JP)
(72) Inventor: KONISHI Shuhei, Settsu-shi Osaka 566-0001 (JP); MINAMI Yuta, Settsu-shi Osaka 566-0001 (JP); MATSUOKA Miwa, Settsu-shi Osaka 566-0001 (JP)
(74) Representative: Kilian Kilian & Partner
(86) International application number: PCT/JP2011/063907
(87) International publication number: WO 2012/005100

(57) **Abstract**

It is aimed to put a mark for twist identification with work as simple as possible. An air bag device includes an inflator configured to supply a gas, and an air bag folded into an elongated shape and configured to inflate and deploy upon supply of the gas from the inflator. An elongated holder such as an adhesive tape is wound around the air bag. A part of the elongated holder extends outwardly from an outer periphery of the air bag and is configured as a mark for twist identification.

## Description

### Technical Field

The present invention relates to an air bag that inflates by a gas of an inflator operating in a vehicle emergency, and more particularly, to the technology of preventing the air bag from twisting when the air bag is mounted to a vehicle.

### Background Art

Patent Document 1 discloses an air bag as an example of conventional air bags of side air bag devices.

Patent Document 1 discloses the configuration in which twist identification means are disposed around a folded air bag. The configuration in which a tape material for collapse prevention is marked with a pen or the like is disclosed as the twist identification means.

### Prior Art Document

### Patent Document

Patent Document 1: Japanese Patent Application Laid-Open No. 11-321532 (1999)

### Summary of the Invention

### Problem to be Solved by the Invention

Unfortunately, the work of putting on a mark on the tape material for collapse prevention is additionally required in the technology disclosed in Patent Document 1, which complicates the work.

Therefore, the present invention has an object to enable marking for twist identification with work as simple as possible.

### Means to Solve the Problem

In order to solve the above-mentioned problem, an air bag device according to a first aspect includes an inflator configured to supply a gas, an air bag folded into an elongated shape and configured to inflate and deploy upon supply of the gas from the inflator, and an elongated holder wound around the air bag such that a part thereof extends outwardly from an outer periphery of the air bag.

In a second aspect, in the air bag device according to the first aspect, the elongated holder is an adhesive tape wound around the air bag.

In a third aspect, in the air bag device according to the second aspect, one portion and another portion of an adhesive layer of the adhesive tape are bonded to each other such that the part of the elongated holder extends outwardly from the outer periphery of the air bag.

In a fourth aspect, in the air bag device according to the third aspect, portions of the adhesive layer at both ends of the adhesive tape are bonded to each other such that the part of the elongated holder extends outwardly from the outer periphery of the air bag.

In a fifth aspect, in the air bag device according to any one of the first to fourth aspects, the air bag is folded into an elongated shape in a final state of being folded in two, and the elongated holder extends outwardly at a seam in the final state in which the air bag is folded in two.

### Effects of the Invention

According to the first aspect, a part of the elongated holder is extended outwardly from the outer periphery of the air bag, which enables to put a mark for twist identification with simple work.

According to the second aspect, the elongated holder is an adhesive tape wound around the air bag. Therefore, a mark for twist identification can be put while winding the adhesive tape around the air bag with relative ease and is unlikely to become misaligned after winding the adhesive tape.

According to the third aspect, one portion and another portion of the adhesive layer of the adhesive tape are bonded to each other, which enables to put a mark for twist identification with simple work.

According to the fourth aspect, the portions of the adhesive layer at both ends of the adhesive tape are bonded to each other, which enables to put a mark for twist identification with simple work. In addition, the bonded portions of the adhesive layer at both ends of the adhesive tape can be separated from each other with relative ease when the air bag inflates.

According to the fifth aspect, when the elongated holder is wound around the air bag while extending a part thereof outwardly from the outer periphery of the air bag, the edges on the both sides of the air bag can be brought together at the seam in the state in which the air bag is folded in two. Therefore, the folded state of the air bag can be maintained easily. Particularly in the case where an adhesive tape is used as the elongated holder and the portions of the adhesive layer at both ends of the adhesive tape are bonded to each other at the seam, the curtain air bag first inflates so as to open the seam when the curtain air bag inflates and deploys. Therefore, the bonded portions of the adhesive layer at both ends of the adhesive tape are separated from each other easily, and the wound state by the adhesive tape can be easily released.

### Brief Description of Drawings

FIG. 1 is a schematic view showing an overall configuration of a curtain air bag device.
FIG. 2 is an explanatory view showing a state in which adhesive tapes are wound around the curtain air bag device.
FIG. 3 is an explanatory view showing the work of winding the adhesive tape around the curtain air bag.
FIG. 4 is another explanatory view showing the work of winding the adhesive tape around the curtain air bag.
FIG. 5 is an explanatory view showing an example in which the curtain air bag is folded.
FIG. 6 is another explanatory view showing the example in which the curtain air bag is folded.
FIG. 7 is an explanatory view showing an example in which a position of a mark is set with respect to the folded curtain air bag.
FIG. 8 is an explanatory view showing the twisted curtain air bag.
FIG. 9 is an explanatory view showing a modification of the mark.
FIG. 10 is an explanatory view showing another modification of the mark.

### Embodiment for Carrying Out the Invention

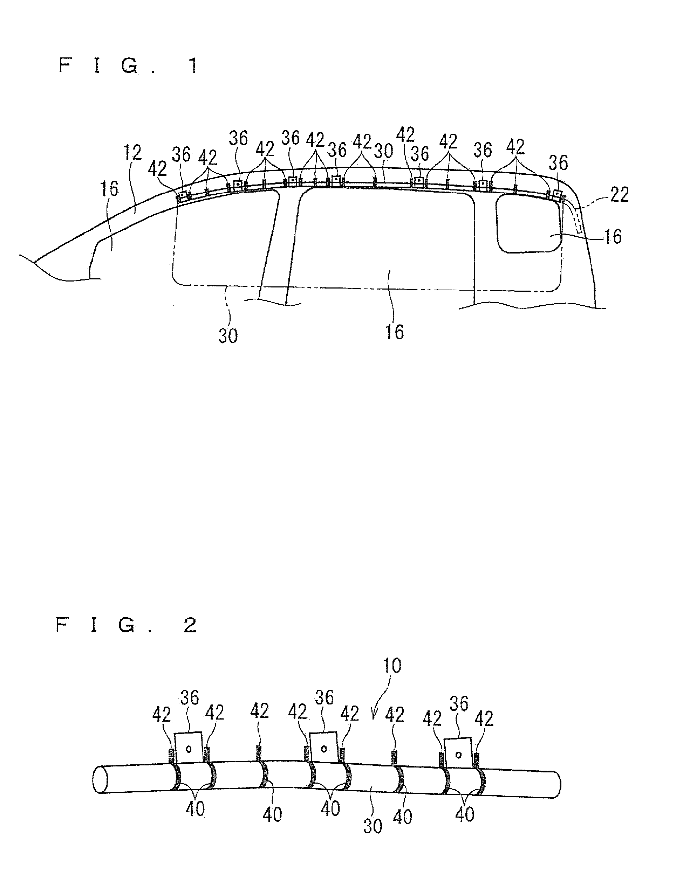

A curtain air bag device according to an embodiment is described. FIG. 1 is a schematic view showing an overall configuration of a curtain air bag device 10.

The curtain air bag device 10 is provided to a side portion inside a vehicle, and is configured to be deployable along a side surface inside the vehicle in a vehicle emergency, which includes an inflator 22 and a curtain air bag 30.

The inflator 22 is formed into a rod shape, and is configured to supply a high temperature and high pressure gas into the curtain air bag 30 in response to a detection signal in a vehicle collision.

The curtain air bag 30 is formed by, for example, sewing a base fabric into a bag shape so as to inflate and deploy in a flat shape between a side window 16 of the vehicle and the head of an occupant in the vehicle. Formed at one edge of the curtain air bag 30 (here, rear portion of the vehicle in the state in which the curtain air bag 30 is mounted to the vehicle) is an opening passing through the inner side and outer side of the curtain air bag 30. One end of the inflator 22, which is located on the side on which a gas is supplied, is inserted into the curtain air bag 30 through the opening of the curtain air bag 30.

The curtain air bag 30 is folded into an elongated shape in a normal state. The curtain air bag 30 is folded by, for example, folding into a roll shape, folding into a bellows shape, or folding in combination of the above.

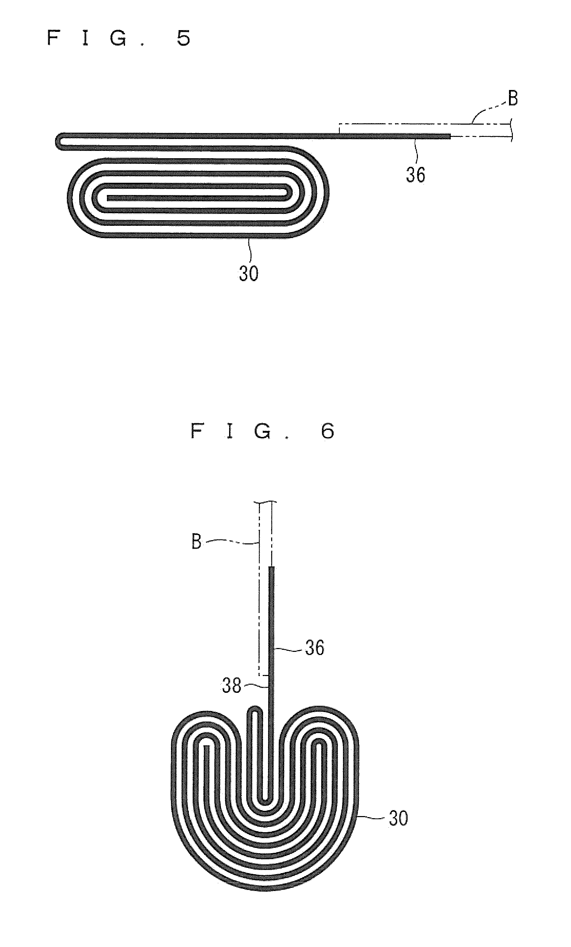

The curtain air bag 30 is provided with mounting pieces 36 for mounting the curtain air bag device 10 to the vehicle. For example, the mounting piece 36 is formed by partially extending the base fabric forming the curtain air bag 30 outwardly. The mounting piece 36 is mounted and fixed to the vehicle by means of, for example, a mounting bracket B (see FIGS. 5 and 6) formed by appropriately punching and pressing a metal plate or the like. That is, the mounting piece 36 is mounted to the mounting bracket B by means of a mounting structure such as a sandwiching structure by a screw head or a nut and the mounting bracket B. When the mounting bracket B is mounted to the vehicle by a hooking structure, a fixing structure such as a screwing structure, and the like, the curtain air bag 30 folded into an elongated shape is mounted along a roof-side rail 12 located above the side window 16. In this mounted state, the curtain air bag 30 is covered with a cabin interior panel or the like and is not viewed from the inside of the vehicle. In a vehicle emergency such as a lateral collision of a vehicle, a gas supplied from the inflator 22 is introduced into the curtain air bag 30. As a result, the inflated curtain air bag 30 splits and opens the portion between the interior panel and the roof-side rail 12, and deploys toward the vehicle inside, to thereby inflate and deploy into a flat bag shape between the side window 16 of the vehicle and the head of the occupant of the vehicle (see the curtain air bag 30 indicated by a chain double-dashed line in FIG. 1).

Further, the curtain air bag device 10 includes adhesive tapes 40 as elongated holders wound around the curtain air bag 30 folded into an elongated shape. FIG. 2 is an explanatory view showing the state in which the adhesive tapes 40 are wound around the curtain air bag device 10.

The adhesive tape 40 is obtained by forming an adhesive layer 40a on one main surface of a flexible belt-like sheet member. An acetate fiber or the like can be used as the belt-like sheet member, and adhesives (including a pressure-sensitive adhesive) that can be bonded to a member on the other side through pressurization can be used as the adhesive layer 40a.

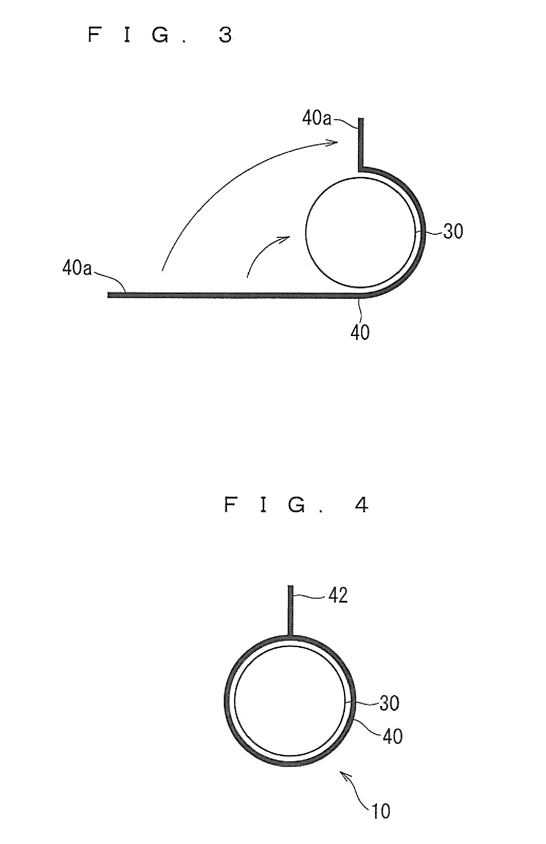

For example, the adhesive tape 40 is wound around the curtain air bag 30 folded into an elongated shape as follows. That is, as shown in FIG. 3, the adhesive tape 40 is wound around the curtain air bag 30 such that the surface of the adhesive tape 40 on the adhesive layer 40a side is brought into contact with the surface of the curtain air bag 30. On this occasion, one end of the adhesive tape 40 is set to extend outwardly (upwardly in FIG. 3) from a predetermined position (upper position in FIG. 3) on the outer periphery of the curtain air bag 30. It suffices that the position at which the one end of the adhesive tape 40 extends is determined based on the mounting piece 36 or a folded shape of the curtain air bag 30 as described below. Then, as shown in FIG. 4, the adhesive layer 40a on the other end of the adhesive tape 40 wound around the curtain air bag 30 and the adhesive layer 40a on the one end of the adhesive tape 40 are abutted against each other to be bonded. As a result, the both ends that are parts of the adhesive tape 40 extend outwardly from the predetermined position (here, upper position) on the outer periphery of the curtain air bag 30 folded into an elongated shape. This outwardly extending portion 42 projects outwardly in a radial direction in cross-section of the curtain air bag 30 folded into an elongated shape, and serves as the mark 42 for twist identification. The adhesive layer 40a on one end of the adhesive tape 40 and the adhesive layer on the other end thereof are not required to completely overlap each other, and the adhesive layer 40a at the end may be exposed toward the outside.

In the case of winding the adhesive tape 40 around the curtain air bag 30, the adhesive tape 40 may be cut into a required predetermined length in advance. Alternatively, the winding work may be performed in the state in which the adhesive tape 40 is wound around the core for winding and housing, and after the winding work is finished, the portion of the adhesive tape 40, which has undergone the winding work, may be separated from the portion wound around the core.

Preferably, the belt-like sheet member serving as the base material of the adhesive tape 40 is configured so as to be easily cut along the width direction thereof from the viewpoint of workability. For that purpose, in a case where the belt-like sheet member is formed of a fabric-like sheet such as an acetate fiber, it is preferable that the strength of the warp extending along the longitudinal direction of the belt-like sheet member be smaller than the strength of the weft extending along the width direction of the belt-like sheet member.

The adhesive tapes 40 are attached to a plurality of spots in the longitudinal direction of the curtain air bag 30 folded into an elongated shape.

Preferably, the adhesive tapes 40 are provided at positions of the folded curtain air bag 30 including the positions adjacent to the mounting pieces 36 (that is, positions adjacent to the portions mounted to the vehicle). When the adhesive tapes 40 are wound around the curtain air bag 30 at the positions adjacent to the mounting pieces 36, the curtain air bag 30 can be folded in order to maintain a compact and tidy manner at the positions adjacent to the mounting pieces 36. This is because in mounting the curtain air bag device 10 to the vehicle via the mounting pieces 36, the curtain air bag 30 is unlikely to interfere with the mounting pieces 36 and the peripheral portions thereof, and thus the curtain air bag device 10 can be smoothly mounted to the vehicle.

It is preferable that the adhesive tape 40 be provided at least one spot between the adjacent mounting pieces 36 and that the mark 42 be provided to the adhesive tape 40. This is because the presence or absence of a twist of the curtain air bag 30 can be checked between the adjacent mounting pieces 36.

In order to check the presence or absence of a twist of the curtain air bag 30, it is preferable that the adhesive tapes 40 wound around the curtain air bag 30 all have the marks 42. Preferably, the positions at which the marks 42 extend from the outer periphery of the folded curtain air bag 30 are aligned in all of the adhesive tapes 40. For example, it suffices that those positions are aligned such that the marks 42 all extend upwardly from the folded curtain air bag 30.

That is, as a typical configuration, it is preferable to provide the adhesive tapes 40 to the both positions adjacent to each mounting piece 36 and at least one spot between the adjacent mounting pieces 36 and provide the marks 42 to all of the adhesive tapes 40.

A preferable manner of the position from which the mark 42 extends is described in relation to the folded manner of the curtain air bag 30.

That is, as shown in FIG. 5, the curtain air bag 30 is folded into a flat roll shape, and then, as shown in FIG. 6, is finally folded in two from the flat shape to be finally folded into an elongated shape. Here, the curtain air bag 30 folded into a roll shape flat in a horizontal direction is folded in two such that the center line in the width direction of the upper surface thereof becomes a valley line, and both side edges thereof abut against each other in the upper portion. As a result, a seam 38 is formed in the upper portion of the curtain air bag 30 folded into an elongated shape. FIGS. 5 and 6 are explanatory views of the curtain air bag 30 in cross-section in which the mounting piece 36 is provided. The curtain air bag 30 may be folded into a bellows shape before being finally folded in two.

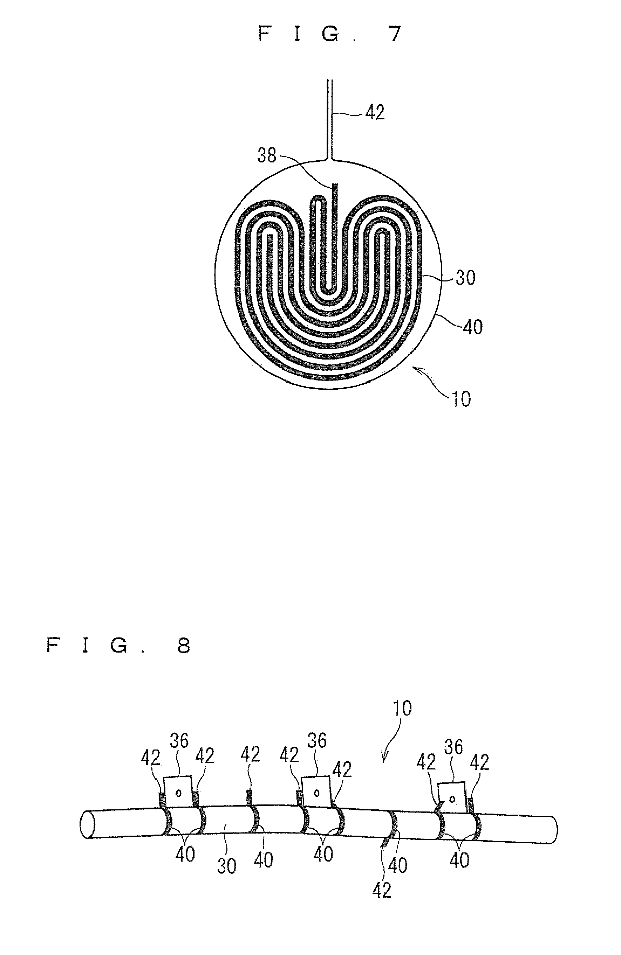

In winding the adhesive tape 40 around the curtain air bag 30 folded as described above, as shown in FIG. 7, it is preferable that the mark 42 by the adhesive tape 40 extend outwardly at the seam 38 in a manner in which the curtain air bag 30 is finally folded in two. More specifically, portions of the adhesive layer 40a at both ends of the adhesive tape 40 are bonded to abut against each other at the position outside the seam 38 such that the mark 42 formed by bonding extends outwardly on the extended line of the seam 38. This results in that the both side edges of the curtain air bag 30 are brought together so as to block the seam 38, and the folded manner of the curtain air bag 30 is easily kept with more reliability.

In mounting the curtain air bag device 10 configured as described above to the vehicle, it is possible to check that the curtain air bag 30 is not twisted with reference to the marks 42. That is, in a case where the curtain air bag 30 is not twisted, as shown in FIGS. 1 and 2, the marks 42 of the all adhesive tapes 40 are directed to the same direction (here, upwardly). On the other hand, in a case where the curtain air bag 30 is twisted, as shown in FIG. 8, the marks 42 of some of the adhesive tapes 40 are directed to directions differently from that of the marks 42 of the other adhesive tapes 40. In FIG. 8, the third mark 42 from the right is directed downwardly and the marks in front of and behind the third mark 42 are directed obliquely upward. Therefore, the presence or absence of a twist of the curtain air bag 30 can be checked with ease during and after the work of mounting the curtain air bag device 10.

According to the curtain air bag device 10 configured as described above, the mark for twist identification 42 is formed by extending a part of the adhesive tape 40 outwardly from the outer periphery of the folded curtain air bag 30, which enables to put the mark 42 with simple work while suppressing a cost increase. That is, the mark 42 can be put with ease through a partial innovation when the adhesive tape 40 is wound around the curtain air bag 30.

The adhesive tape 40 is used as the elongated holder that holds the curtain air bag 30 in a folded manner, which enables to easily form the mark 42 while easily winding the adhesive tape 40 around the curtain air bag 30. Moreover, in the state in which the adhesive tape 40 is wound around the curtain air bag 30, the adhesive tape 40 is unlikely to be misaligned from the curtain air bag 30, and the position of the mark 42 is unlikely to be misaligned as well. This enables to check the presence or absence of a twist with more reliability.

The mark 42 can be formed easily by bonding the portions of the adhesive layer 40a of the adhesive tape 40 to each other.

Further, the mark 42 is formed by bonding the portions of the adhesive layer 40a at both ends of the adhesive tape 40 to each other, and thus, the mark 42 can be formed if the work of winding the adhesive tape 40 around the curtain air bag 30 and bonding both ends thereof to hold the wound manner. This enables to form the mark 42 easily.

The configuration in which the portions of the adhesive layer 40a at both ends of the adhesive tape 40 are bonded to each other has a larger adhesive force and less causes peeling-off compared with the configuration in which one end of the adhesive tape 40 is processed by being wound around the back surface (an adhesive layer is an inner surface) of an adhesive tape. Therefore, the manner in which the curtain air bag 30 is folded can be held more reliably. The parts obtained by bonding the portions of the adhesive layer 40a at both ends of the adhesive tape 40 are easily separated from each other by the force for causing those portions to spread outwardly in the radial direction of the wounded adhesive tape. This enables to easily separate the both ends of the adhesive tape 40 when the curtain air bag 30 inflates and deploys.

The mark 42 formed by extending a part of the adhesive tape 40 outwardly from the outer periphery of the curtain air bag 30 is formed at a position located outside of the seam 38 in the final manner in which the curtain air bag 30 is folded in two. For this reason, the both side edges of the curtain air bag 30 can be brought together at the seam 38 in the formation of the mark 42. For example, in the embodiment above, when the portions of the adhesive layer 40a at both ends of the adhesive tape 40 are bonded to abut against each other, the both side edges of the curtain air bag 30 can be brought together at the seam 38. This makes it easy to constantly hold the folded curtain air bag 30 in a more compact manner.

The curtain air bag 30 first inflates so as to open the seam 38 when the curtain air bag 30 inflates and deploys. Accordingly, the bonded portions of the adhesive layer 40a at both ends of the adhesive tape 40 are easily separated from each other, and the wound state by the adhesive tape 40 is released easily.

### <Modifications>

While the air bag device has been described above in detail, the foregoing description is in all aspects illustrative, and the present invention is not limited thereto. That is, numerous modifications and variations can be devised in the described aspects without departing from the scope of the invention.

For example, the embodiment above has described the curtain air bag device 10 that is provided to the side portion inside a vehicle and deploys and operates along the side surface inside the vehicle in a vehicle emergency, which may be an air bag device or the like that deploys along a rear window. That is, it suffices that an air bag device is folded into an elongated shape in a normal state and deploys from the folded state to a flat shape.

The embodiment above has described an example in which the marks 42 are provided to all of a plurality of adhesive tapes 40, which is not necessarily required. For example, the marks 42 may be omitted at, for example, the edges of the curtain air bag 30. Needless to say, it is preferable to provide the marks 42 to all of the adhesive tapes 40 for easily identifying the presence or absence of a twist. It is also preferable that the positions of all of the marks 42 are aligned on the outer periphery of the curtain air bag 30, which is not necessarily required. For example, the position of the mark 42 at the position adjacent to the mounting piece 36 may be different from the position of the mark 42 between the mounting pieces 36.

The example in which the mark 42 is formed by the adhesive tape 40 is not limited to the example above.

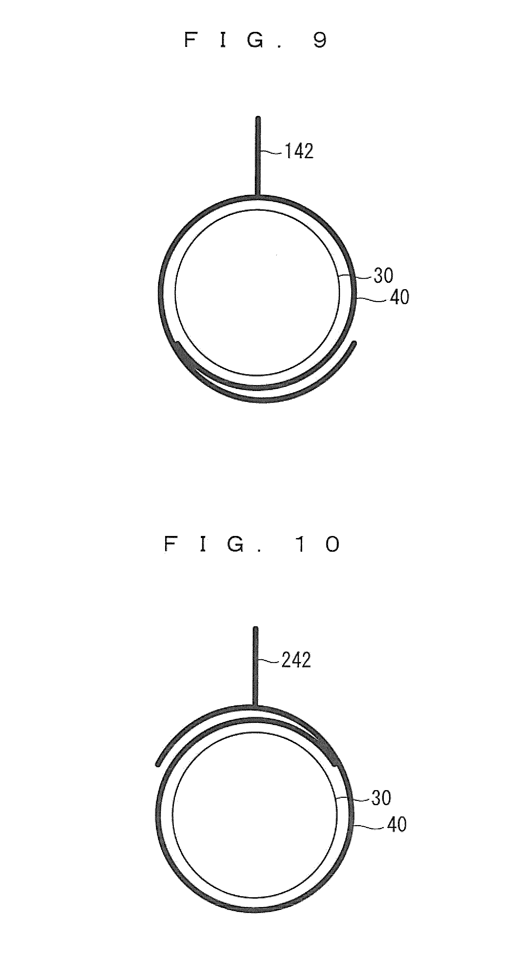

For example, as shown in FIG. 9, the middle portions in the longitudinal direction of the adhesive tape 40 wound around the curtain air bag 30 may be pinched out outwardly and the pinched-out portions of an adhesive layer 40a may be bonded to each other to form a mark 142. In this case, one end of the adhesive tape 40 may be wound around the other outer periphery of the adhesive tape 40.

Alternatively, for example, as shown in FIG. 10, one end of the adhesive tape 40 wound around the curtain air bag 30 may be pinched outwardly and the pinched-out portions of the adhesive layer 40a may be bonded to each other to form a mark 242. That is, while the mark 42 is formed by the both ends of the adhesive tape 40 in the embodiment above, the mark 242 is formed by one end of the adhesive tape 40 in this modification. In this case, it suffices that the portion of the one end of the adhesive tape 40 other than the portion forming the mark 242 is wound around the other outer periphery of the adhesive tape 40.

Still alternatively, the end of the adhesive tape 40, which is the initial edge when the adhesive tape 40 is wound around the curtain air bag 30, may be caused to stick out in the width direction of the adhesive tape 40 to be wound, and the sticking-out end may serve as a mark for twist identification.

The elongated holder wound around the curtain air bag 30 is not necessarily required to be the adhesive tape 40. A string, thread, or the like may be used as the elongated holder and a knot thereof may be used as the mark for twist identification.

### Description of Symbols

| | |
|---|---|
| 10 | curtain air bag device |
| 22 | inflator |
| 30 | curtain air bag |
| 38 | seam |
| 40 | adhesive tape |
| 40a | adhesive layer |
| 42, 142, 242 | mark |

## Claims

1. An air bag device, comprising:
an inflator configured to supply a gas;
an air bag folded into an elongated shape and configured to inflate and deploy upon supply of the gas from said inflator; and
an elongated holder wound around said air bag such that a part thereof extends outwardly from an outer periphery of said air bag.

2. The air bag device according to claim 1, wherein said elongated holder is an adhesive tape wound around said air bag.

3. The air bag device according to claim 2, wherein one portion and another portion of an adhesive layer of said adhesive tape are bonded to each other such that the part of said elongated holder extends outwardly from the outer periphery of said air bag.

4. The air bag device according to claim 3, wherein portions of said adhesive layer at both ends of said adhesive tape are bonded to each other such that the part of said elongated holder extends outwardly from the outer periphery of said air bag.

5. The air bag device according to any one of claims 1 to 4, wherein
said air bag is folded into an elongated shape in a final state of being folded in two, and
said elongated holder extends outwardly at a seam in the final state in which said air bag is folded in two.
